Europäisches Patentamt

European Patent Office

Office européen des brevets

(11) Publication number: **0 470 690 A2**

# EUROPEAN PATENT APPLICATION

(21) Application number: **91303880.8**

(22) Date of filing: **29.04.91**

(51) Int. Cl.5: **B29C 71/00**

(30) Priority: **10.08.90 US 565367**

(43) Date of publication of application:
**12.02.92 Bulletin 92/07**

(84) Designated Contracting States:
**AT BE CH DE DK ES FR GB GR IT LI LU NL SE**

(71) Applicant: **ATOCHEM NORTH AMERICA, INC.**
**Three Parkway**
**Philadelphia, Pennsylvania 19102(US)**

(72) Inventor: **Rutkowski, Ronald D.**
**122 Alton Street**
**Elizabeth, New Jersey, 07202(US)**
Inventor: **Burchill, Michael T.**
**484 Dutch Neck Road**
**East Windsor, New Jersey, 08520(US)**
Inventor: **Bremer, Michael F.**
**34 Heyers Mill Road**
**Colts Neck, New Jersey, 07722(US)**

(74) Representative: **Jennings, Nigel Robin et al**
**KILBURN & STRODE 30 John Street**
**London WC1N 2DD(GB)**

(54) **Modifying the surface of polymer articles.**

(57) Apparatus for modifying the surface region of a polymer article includes an applicator unit (20) defining a gap (26) extending therethrough. In use, the applicator unit is received within a treatment tank (180) filled with fluid, such as water, and immersed in the fluid and a polymer article is moved through the gap. A solvent is introduced into the gap through a channel (34) and subsequently substantially removed by a primary vacuum module (68). Wash water is then applied to the polymer article by a wash module (94) and the wash water is then removed by a secondary vacuum module (68) and/or a wiper (46) which contacts the surface of the polymer article. The solvent may modify the surface region of the article by dissolving surface imperfections or it may include a dissolved modifier ingredient which is then incorporated into the surface of the article.

FIG. 1

The present invention relates to an apparatus and method for modifying polymer articles and is concerned with an apparatus and method for modifying the surface region of polymer articles.

Various ingredients may be incorporated in polymer articles to protect the articles against external influences or to impart a specific property to the article. Typically, such ingredients are added to the surface region of the polymer article, i.e. to a depth of about 200 microns. Ingredients which are commonly incorporated into the surface region of polymer articles include ultraviolet light stabilizers, anti-oxidants, anti-static agents, and pigments.

It is known that various organic solvents have the ability to swell thermoplastic polymers, such as polyvinyl chloride (hereinafter "PVC"). This property has been used to incorporate or infuse into the surface region of the thermoplastic article ingredients which will, in part, protect against the degradative effects of the atmosphere, especially ultraviolet light and oxygen.

For instance, Belgium Patent Number 612,206 discloses a process for treating ridged PVC objects in order to stabilize them against the action of sunlight. This process involves immersing the PVC object in a swelling solvent containing a light stabilizing agent, followed by evaporation of the solvent. This procedure is undesirable because the stabilizer is left on the surface of the objects, environmental hazards are created, and a product having a poor surface appearance is obtained.

U.S. Patent No. 3,297,462 discloses a process for rendering polymeric films resistant to the degradative effects of sunlight by immersing them in a solution of a benzophenone derivative in a mixture of diethylene glycol and glycerine followed by a washing first in diethylene glycol and then in water. The polymers disclosed as being suitable for such treatment are those having a zero strength temperature of at least 200°C. This requirement, however, excludes a number of useful polymers such as PVC. PVC films subjected to this treatment produce hazy samples due to softening and exhibited little or no improvement in weather-ability.

U.S. Patent No. 4,770,905 also describes a method and apparatus for modifying PVC articles with an ultraviolet light stabilizer. This patent discloses continuously transporting a PVC sheet through an upper water layer in a water bath. A pump draws a stabilizer solution from a layer beneath the water layer to a nozzle positioned above the PVC article. The nozzle sprays the stabilizer solution onto the sheet as it is moved through the water layer. Subsequently, while still in the water layer, a water jet directs a stream of water onto the surface of the article to displace any residual solution therefrom. However, it has been found that on articles of certain configurations, liquid puddles remain on portions of the article's surface. These puddles are difficult to remove and tend to mar the surface appearance of the article.

Thus, despite considerable past research aimed at modifying thermoplastic polymers, such as PVC, to protect such polymers from the degradative effects of sunlight and other outside influences, there still exists a need for an effective method of treatment of polymer articles to provide such protection without adversely affecting the surface appearance of such articles. Preferably, such a process should be able to be carried out as a batch or continuous process and be environmentally safe. That is, the process should be capable of being carried out at or near ambient temperature and the solvent concentration in the atmosphere should be below that permitted by regulation. Also, because in a typical PVC extrusion assembly line process the upper limit for contact time of PVC articles with surface modification agents is about 20 seconds, the process should be capable of modifying the PVC articles within this limited time period.

It is the object of the invention in general terms to overcome the problems and disadvantages of the prior art.

More specifically, one object of the present invention is to provide a method and apparatus for modifying a polymer article in which the modifier is applied to only the surface region of the article.

It is another object of the present invention to provide a method and apparatus for modifying a polymer article which does not alter the original shape and hardness of the article.

It is yet another object of the present invention to provide an apparatus and method for modifying a polymer article that does not result in the surface of the article being softened, streaked, or coated with any of the ingredients incorporated therein.

It is still another object of the present invention to provide an environmentally safe method and apparatus which can be carried out in a continuous mode and which is adapted to commercial time restraints.

According to the present invention a method of incorporating a modifier ingredient into the surface region of an article formed of a polymer is characterised by transporting the polymer article through a gap; introducing a solution of the modifier ingredient in a solvent into the gap through an inlet to provide a coating of the solution on the surface of the article to be treated as the article is transported through the gap; and maintaining the solution in contact with the said surface to incorporate the modifier ingredient into the surface region of the article.

The solution of the modifier ingredient is preferably introduced into the gap through a confined area which may be either a channel or a plurality of spaced holes extending substantially transverse to the longitudinal direction of the gap, that is to say transverse to the direction of movement of the polymer article.

It is preferred that the article is immersed in a liquid bath as it is transported through the gap whereby the solution is prevented from contacting the air. In a preferred embodiment, at least a portion of the gap has an upper surface and/or lower surface with a configuration substantially identical to the configuration of the surface of the article to be treated.

The method preferably also includes the step of removing from the surface of the article any residual solution that has not been incorporated therein. This step of removing the residual solution may include applying a vacuum to the surface of the article to remove residual solution, applying wash water onto the surface of the article and providing a wiper in the gap having a bottom surface which contacts the surface of the article to be treated as it is transported through the gap. The bottom surface of the wiper is preferably substantially identical in shape to the surface of the article to be treated.

It is preferred that the residual solution which is removed is collected from a first portion of the surface of the article and then recirculated to the inlet and reapplied to a second portion of the surface of the article. It is preferred that the solution is applied to the surface of the article and maintained in contact therewith under ambient temperature. The solution may be maintained in contact with the article for a time period in the range of 1 second to 10 seconds and it is particularly preferred that the polymer article is disposed substantially horizontally as it is transported through the gap.

The invention also embraces an apparatus for carrying out the method and thus according to a further aspect of the present invention apparatus for incorporating a modifier ingredient into the surface region of an article formed of a polymer is characterised by an applicator unit defining a gap extending therethrough; and means for introducing a solution of the modifier ingredient in a solvent into the gap through an inlet onto the surface of the article to be treated as it is transported through the gap to provide a coating of the solution thereon.

The treatment tank preferably includes a bottom surface, an inlet wall and an outlet wall, the inlet and outlet walls including inlet and outlet openings, respectively, to allow the article to be transported through the treatment tank. The treatment tank may include an overflow conduit for maintaining a desired level of fluid in the treatment tank. The apparatus may further include an overflow tank including a bottom surface, an inlet wall and an outlet wall, the treatment tank being disposed within the overflow tank and spaced from it, the overflow conduit communicating with the overflow tank. The treatment tank may include a baffle extending into the overflow tank to minimise disturbance from fluid entering the overflow tank through the overflow conduit.

It is preferred that the applicator unit is of modular construction and that the applicator unit has an upper section and a lower section which together define a gap, the upper section including a first opening which receives an applicator module which defines the channel. The applicator unit may also have a second opening which receives a primary vacuum module, a third opening which receives a wash module and a fourth opening which receives a secondary vacuum module.

The applicator may include sealing means, e.g. a wiper, at the inlet end of the gap arranged to prevent leakage of the solution whilst permitting ingress of the polymer article.

As mentioned above, the apparatus may include one or more wipers arranged to contact the surface of the article to be treated and one of these wipers may be disposed within the channel of the wash water module. The wiper may include grooves to allow the passage of water from the water reservoir to the gap.

The method and apparatus of the present invention may also be used to modify the surface region of a polymer article by removing surface imperfections with a solvent and in this event the solvent need of course not contain a modifier ingredient.

Further features and details of the invention will be apparent from the following description of certain specific embodiments which is given with reference to the accompanying drawings, in which:

Figure 1 is a schematic longitudinal section view of the applicator unit of the apparatus of the present invention;

Figure 2(a) is a plan view of the upper section of the applicator unit;

Figure 2(b) is an end view of the inlet end of the upper section of the applicator unit;

Figure 3(a) is a plan view of the applicator module inserted in the applicator unit;

Figure 3(b) is a cross-sectional view of the applicator module taken along the line a-a of Figure 3(a);

Figure 4(a) is a plan view of the vacuum module inserted in the applicator unit;

Figure 4(b) is a cross-sectional view of the vacuum module taken along the line b-b of Figure 4-(a);

Figure 5(a) is a plan view of the wash water module inserted in the applicator unit;

Figure 5(b) is a cross-sectional view of the wash water module taken along the line c-c of Figure 5(a);

Figure 6 is an end view of the exit end of the applicator unit;

Figure 7(a) is a top view of the cover of the applicator module;

Figure 7(b) is a side view of the cover of the applicator module;

Figure 7(c) is a side view in cross section of a first section of the applicator module;

Figure 7(d) is a top view of the first section of the applicator module shown in Figure 7(c);

Figure 7(e) is an end view of the first section of the applicator module shown in Figure 7(c);

Figure 7(f) is a side view in cross section of a second section of the applicator module;

Figure 7(g) is a top view of the second section of the applicator module shown in Figure 7(f);

Figure 7(h) is an end view of the second section of the applicator module shown in Figure 7(f);

Figure 8(a) is a top view of the cover of the vacuum module;

Figure 8(b) is a side view of the cover of the vacuum module;

Figure 8(c) is a side view in cross section of a first section of the vacuum module;

Figure 8(d) is a top view of the first section of the vacuum module shown in Figure 8(c);

Figure 8(e) is an end view of the first section of the vacuum module shown in Figure 8(c);

Figure 8(f) is a side view in cross section of a second section of the vacuum module;

Figure 8(g) is a top view of the second section of the vacuum module shown in Figure 8(f);

Figure 8(h) is an end view of the second section of the vacuum module shown in Figure 8(f);

Figure 9(a) is a top view of the cover of the wash module;

Figure 9(b) is a side view of the cover of the wash module;

Figure 9(c) is a side view in cross-section of the wash module;

Figure 9(d) is a top view of the wash module shown in Figure 9(c);

Figure 9(e) is an end view of the wash module shown in Figure 9(c);

Figure 10(a) is a side view of a first embodiment of a wiper used in the present invention;

Figure 10(b) is an end view of the wiper shown in Figure 10(a);

Figure 10(c) is a bottom view of the wiper shown in Figure 10(a);

Figure 11(a) is a side view of a second embodiment of a wiper used in the present invention;

Figure 11(b) is an end view of the wiper shown in Figure 11(a);

Figure 11(c) is a bottom view of the wiper shown in Figure 11(a);

Figure 12(a) is a top view of the cover of a second embodiment of an applicator module;

Figure 12(b) is a side view of the cover of the applicator module shown in Figure 12(a);

Figure 12(c) is a side view in cross section of a first section of the second embodiment of the applicator module;

Figure 12(d) is a top view of the first section of the applicator module shown in Figure 12(c);

Figure 12(e) is an end view of the first section of the applicator module shown in Figure 12(c);

Figure 12(f) is a side view in cross section of the second section of the second embodiment of the applicator unit;

Figure 12(g) is a top view of the second section of the applicator unit shown in Figure 12(f);

Figure 12(h) is an end view of the second section of the applicator unit shown in Figure 12(f);

Figure 13 is a perspective view of the treatment tank and overflow tank;

Figure 14 is a schematic diagram of the overall treatment apparatus; and

Figure 15 is a schematic longitudinal section of a second embodiment of applicator unit.

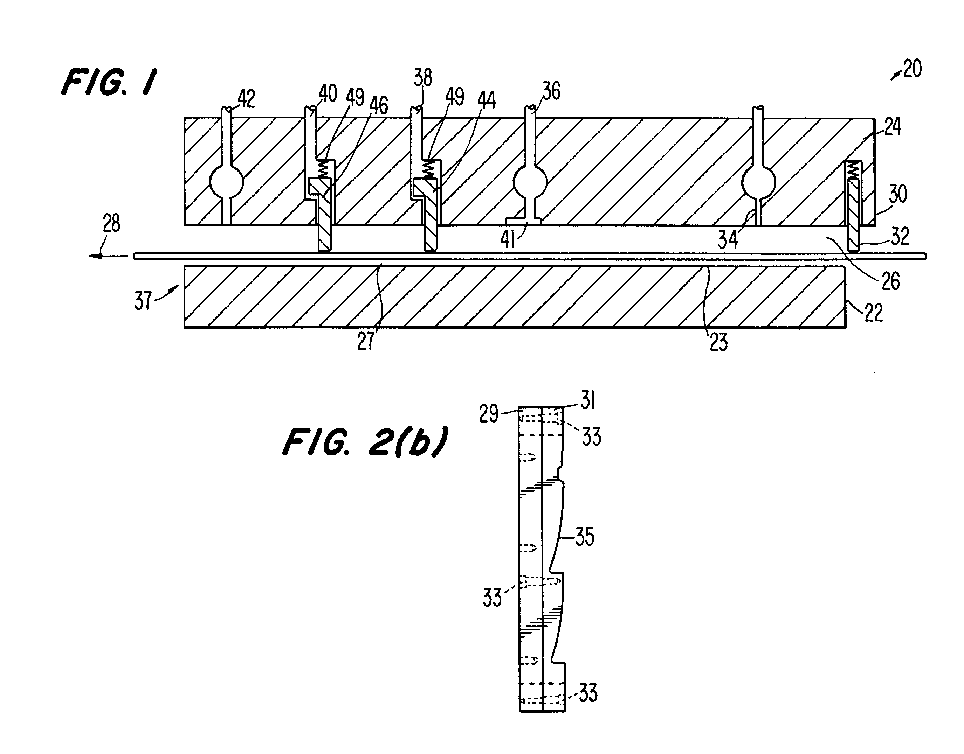

Referring firstly to Figure 1, the applicator unit, which is designated generally with the reference numeral 20, includes an elongate lower section 22 and an elongate upper section 24 which together define a gap 26 which extends in the longitudinal direction of applicator unit 20. A polymer article is transported through gap 26 during the fabrication process in the direction indicated by arrow 28. The article enters the inlet end 30 of applicator unit 20 through a spring loaded wiper 32. The wiper 32 conforms substantially in shape to the upper surface of the article being treated and is in close contact with the surface of the article to thereby act as a seal while permitting ingress of the polymer article into gap 26.

Once inside applicator unit 20, the modifier ingredient in a solvent is applied through a confined area such as channel 34 to the surface of the article to be treated. Channel 34 extends in the transverse direction of applicator unit 20 for substantially the entire width of gap 26. Subsequent to the application of a solution of the modifier ingredient in a solvent through a confined area, means are provided for removing any residual solution remaining on the surface of the polymer article. As shown schematically in Figure 1, the removal means may include a primary vacuum removal section indicated by the reference character 36, a first and second wash water displacement section 38 and 40, respectively, and a secondary vacuum removal section 42. As shown in Figure 1, primary vacuum removal section 36 may include an area of relief designated with reference character 41. Relief area 41 is approximately 1.25 mm in height and 25 mm in length. This area acts to enlarge the surface area over which the vacuum is applied. It is contemplated that first and second wash water displacement sections 38 and 40 may include spring loaded wipers 44 and 46, respectively, which are disposed to contact the surface of the polymer article being treated. The removal means and the means for applying the modifier ingredient are shown only schematically in Figure 1, and the structure of the applicator unit will now be discussed in greater detail with respect to the remaining drawings.

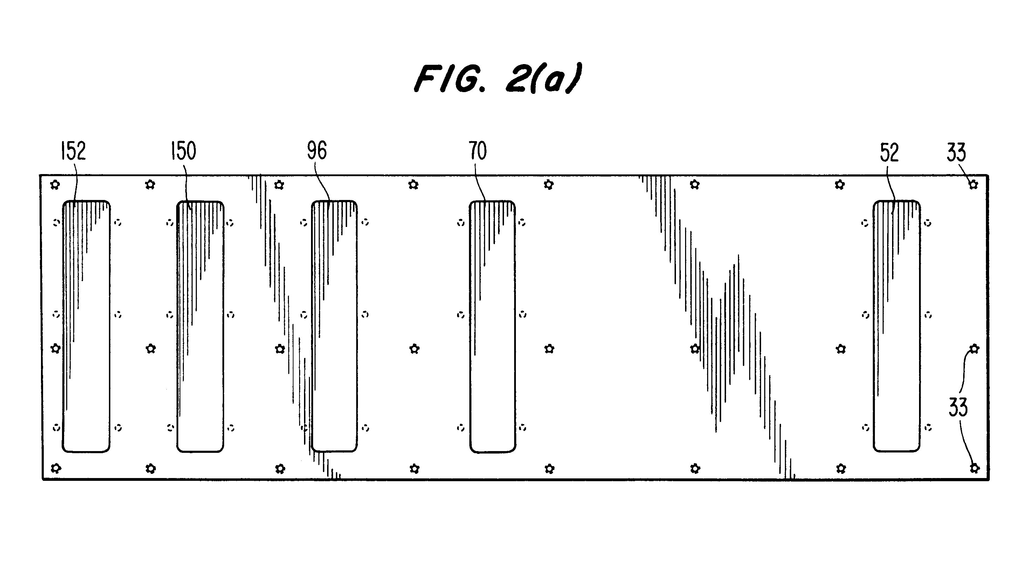

In the specific embodiment, lower section 22 of the applicator is an integral one-piece unit. The upper section may also be an integral one-piece unit but in this case, as shown in Figure 2(b) it consists of two pieces 29 and 31 that are secured together by bolts 33. In either case, upper section 24 may include a plurality of openings, such as openings 52, 70, 96, 150, and 152 shown in Figure 2(a), that are spaced in the longitudinal direction of applicator unit 20. Each of these openings is dimensioned to receive a module for either applying the treatment solution to the surface of the polymer article or removing the treatment solution therefrom. Alternatively, the structure for applying the treatment solution and removing residual solution may be formed integrally within applicator unit 20. The modular construction depicted in the accompanying drawings, however, is advantageous because it permits rearrangement of the order of the modules, allows for selective modification to individual modules, allows for contact time to be easily adjusted, and can be easily adapted to accommodate polymer articles of different configurations.

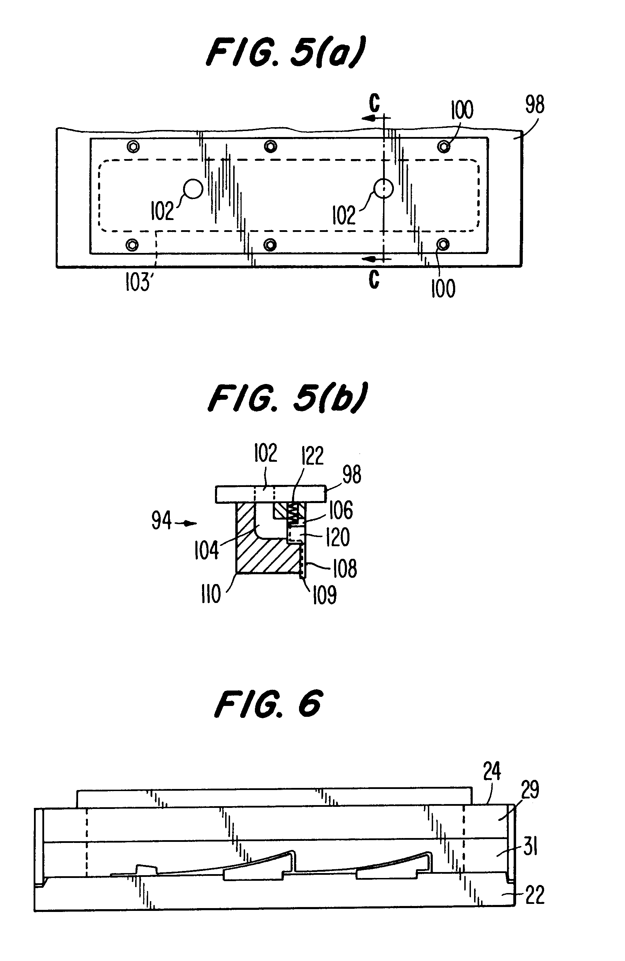

The applicator unit 20 depicted in the accompanying figures is intended to be used with a multiple tiered polymer article having an upper surface corresponding substantially in shape to the bottom surface 35 of upper section 24 shown in Figure 2(b). Upper section 24 is shown in Figure 6 in its normal position overlying lower section 22. Upper section 24 and lower section 22 are secured together by a hinge and latch mechanism (not shown) that allows the unit to be easily opened. As discussed earlier, inlet end 30 of applicator unit 20 includes a wiper 32 which contacts the upper surface of the polymer article and acts as a seal to permit ingress of the article, while preventing substantial leakage of the treatment solution outside applicator unit 20.

Preferably, applicator 20 is immersed in water while the polymer article is transported therethrough. Therefore, the portion 27 of gap 26 below the polymer article (shown in Figure 1) is filled with water. The polymer article transported through gap 26 rides within this water layer on the upper surface 23 of lower section 22 of applicator unit 20 as the modifier ingredient is applied to the upper surface of the article. For this reason, gap 26 has a predetermined thickness greater than the thickness of the polymer article being treated. As embodied herein, the portion of gap 26 above the polymer article where the treatment solution is applied and residual solution removed has a width of about 0.76 mm.

Preferably, the entire gap is formed with the same cross-sectional configuration as the article to be treated. However, it is expected that only selected portions of gap 26 will need to have the same cross-sectional configuration as the article being treated. In such an instance, the selected portions will be defined by the interchangeable modules. Preferably, the polymer article is disposed horizontally as it is transported through applicator unit 20. However, regardless of the orientation of the article, one or both surfaces of the article may be contacted with the solvent solution including the modifier ingredient. It is preferred in many instances, however, that only one surface of the article be contacted with the solution. For instance, if the article being treated is residential cladding, then only the side to be exposed to the environment needs to be treated.

In accordance with the present invention, the apparatus includes means for flowing a solution of the modifier ingredient in a solvent through a confined area onto the surface of the article to be treated as the article is transported through the gap to provide a uniform coating of the solution thereon. As embodied herein, the flowing means includes a reservoir formed in the applicator unit and the confined area is a channel extending in a direction substantially transverse to the longitudinal direction of the gap. The reservoir is connected by the channel to the gap.

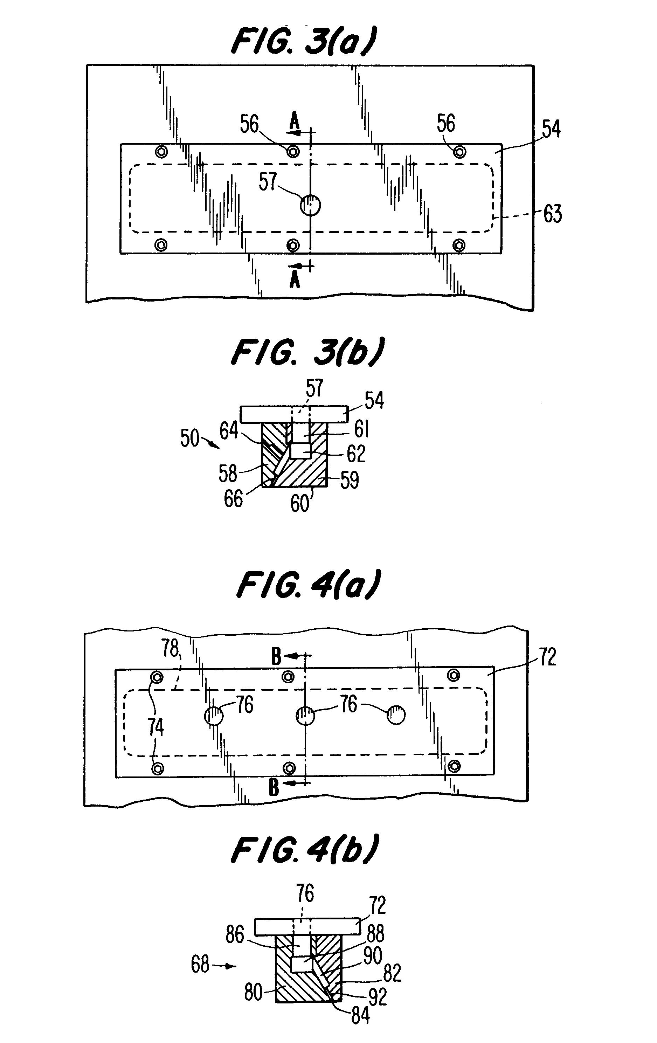

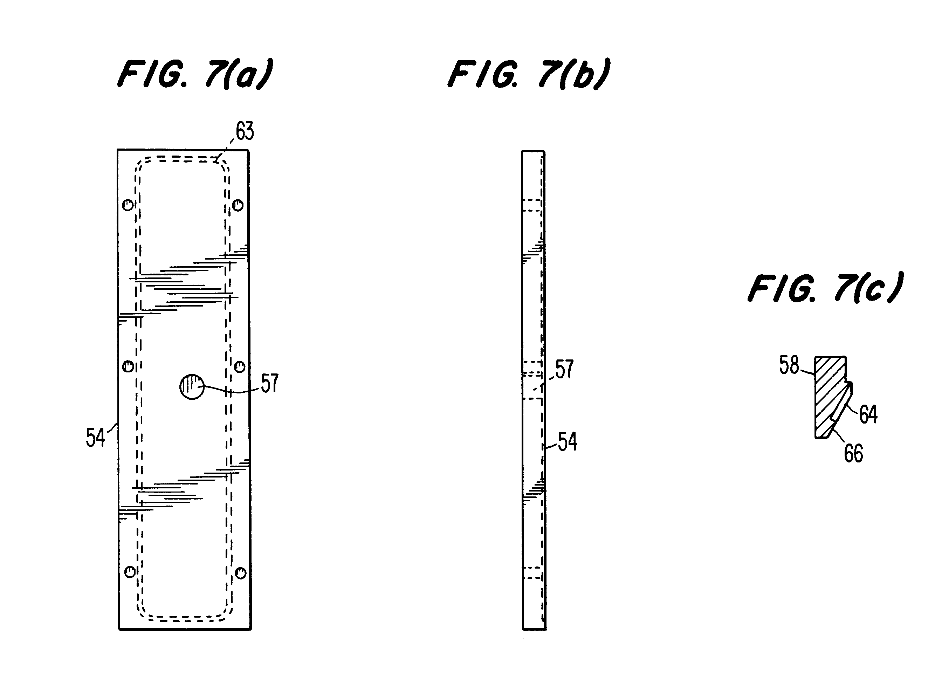

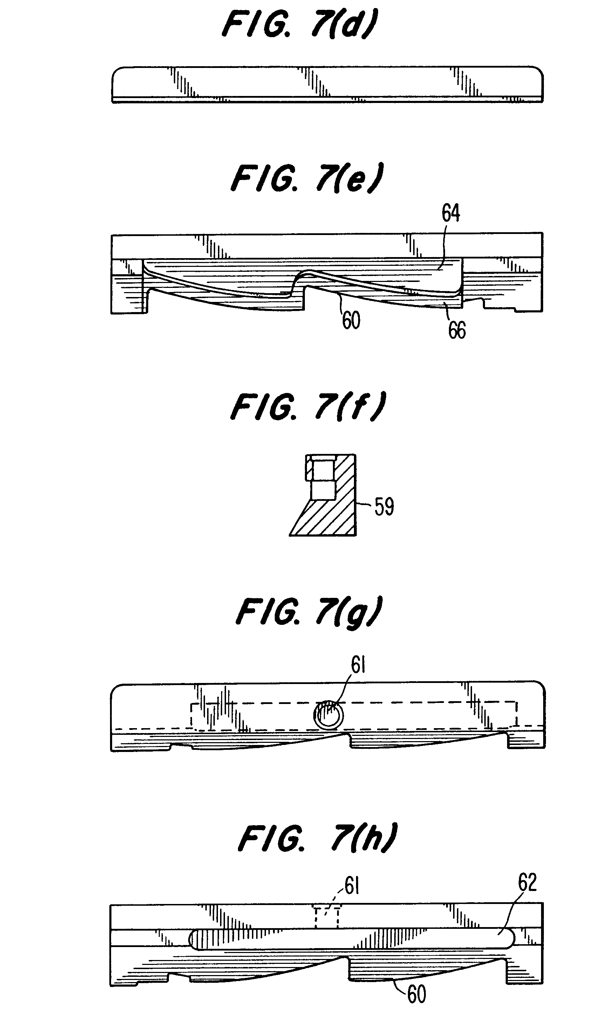

As shown in Figures 3(a), 3(b), and 7(a)-(h), the preferred flowing means includes an applicator module 50 disposed within applicator unit 20. The opening 52 of applicator unit 20 (Figure 2(a)) is configured to receive applicator module 50. As shown in Figure 3(a), the applicator module 50 is frictionally engaged in opening 52 with a cover 54 secured to applicator unit 20 by means of bolts 56. The cover 54 is secured to applicator module 50 by means of bolts (not shown). A gasket 63 shown in Figure 7(a) seals applicator module 50 in opening 52 of applicator unit 20. The cover 54 of applicator module 50 is shown in Figures 7(a) and 7(b), and includes an inlet opening 57 through which a solution of the modifier ingredient in a solvent is provided.

As shown in Figures 7(c)-7(h), applicator module 50 includes a first section 58 and a second section 59 which are secured together by bolts (not shown). Figure 3(b) illustrates first section 58 and second section 59 secured together. Applicator module 50 includes a bottom surface 60 that defines the upper surface of the gap 26. Preferably, the bottom surface 60 of applicator module 50 has a configuration substantially identical to the configuration of the surface of the article to be treated. This arrangement permits a more uniform coating to be applied to the surface of the article being treated. Because applicator module 50 can be removed and replaced with a module having a bottom surface with a different configuration, it is expected that the applicator unit could be easily adapted to apply a modifier ingredient to polymer articles of different configurations.

The solution of the modifier ingredient in a solvent is provided to applicator module 50 through inlet opening 57 of cover 54, and flows through inlet 61 to a reservoir 62 formed inside applicator module 50. From reservoir 62, the solution is provided through a first channel 64 to a second narrower channel 66. As embodied herein, second channel 66 has a width in the range of 0.13-0.38 mm, first channel 64 has a width of about 6.4 mm, and both first and second channels are inclined at an angle of approximately 30° from the vertical. These channels extend substantially the entire width of gap 26 in a direction substantially transverse to the longitudinal direction of the gap and connect reservoir 62 to gap 26.

The solution flows through second channel 66 onto the first surface of the polymer article as it is transported through gap 26. The solution flows through second channel 66 at an even predetermined rate to flow coat a first surface of the polymer article in a uniform and even manner. Preferably, the flow rate is maintained at approximately 0.5 gpm.

Although the embodiment of the present invention depicted in the accompanying drawings illustrates channels 64 and 66 connecting reservoir 62 with gap 26, it is contemplated that a plurality of holes could replace these channels. In such a case, reservoir 62 would be connected by the plurality of holes to gap 26 to supply a solution of the modifier ingredient in a solvent therein.

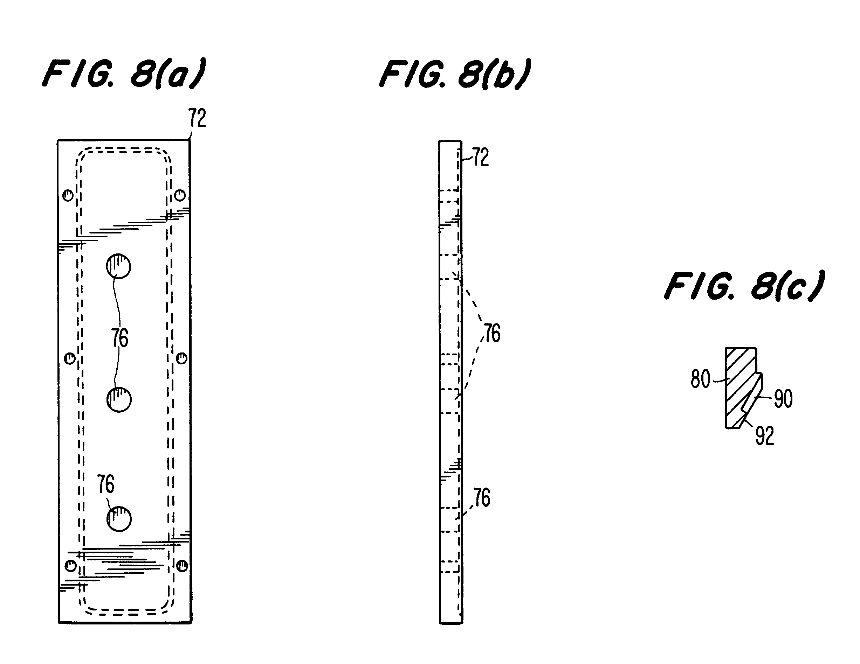

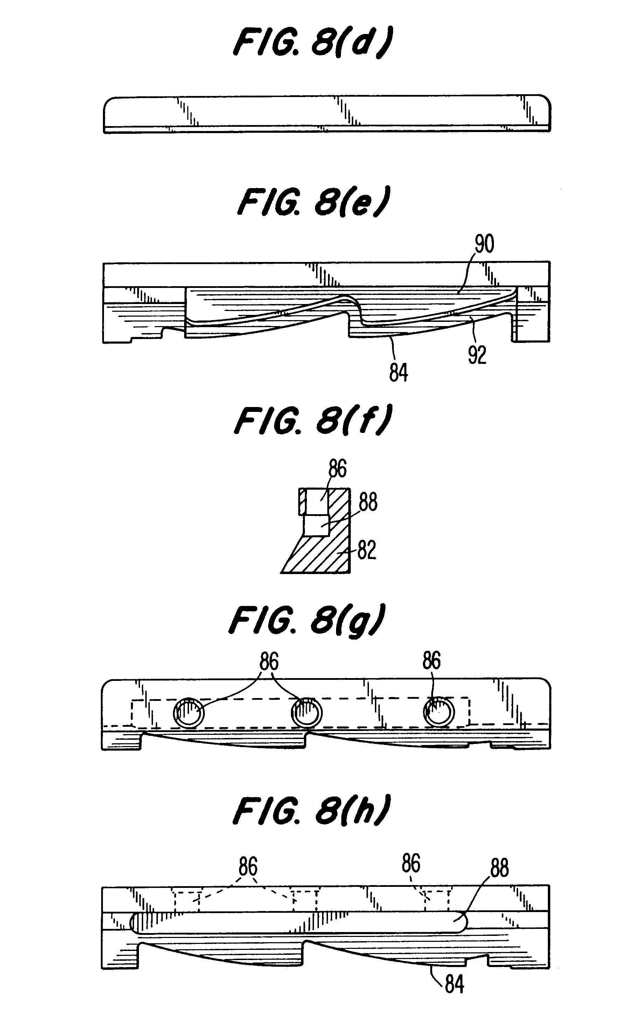

In accordance with the present invention, a means is provided for removing from the surface of the polymer article residual solution that has not been incorporated therein. As embodied herein, the removing means includes a primary vacuum line communicating with the gap to remove residual solution that has not been incorporated into the surface of the polymer article. As shown in Figures 4(a), 4(b), and 8(a)-(h), the preferred removal means includes a primary vacuum module 68 disposed within the second opening 70 of upper section 24 of applicator unit 20. As shown in Figure 4-(a), primary vacuum module 68 is frictionally engaged in opening 70 with a cover 72 secured to applicator unit 20 by means of bolts 74. Cover 72 is secured to primary vacuum module 68 by means of bolts (not shown). A gasket 78, shown in Figure 8(a), seals primary vacuum module 68 in opening 70 of applicator unit 20. The cover 72 of primary vacuum module 68 is shown in Figures 8-(a) and 8(b), and includes three inlet openings 76 through which the vacuum is applied and the residual solution is removed.

As shown in Figures 8(c)-(h), primary vacuum module 68 includes a first section 80 and a second section 82 which are secured together by bolts (not shown). Figure 4(b) illustrates the first section 80 and second section 82 secured together. Primary vacuum module 68 includes a bottom surface 84 that defines the upper surface of the gap 26. Preferably, the bottom surface 84 of primary vacuum module 68 has a configuration substantially identical to the configuration of the surface of the article to be treated. This arrangement allows for more effective removal of the residual solution from the surface of the article.

The vacuum is applied to primary vacuum module 68 through inlet openings 76 of vacuum module cover 72, through vacuum inlets 86 to a primary vacuum line 88. The primary vacuum line 88 is in communication with vacuum inlets 86 and with a first vacuum channel 90 that is formed in first section 80 of primary vacuum module 68. The first vacuum channel 90 communicates with a second vacuum channel 92, which is in communication with gap 26. As embodied herein, first and second vacuum channels 90 and 92, respectively, extend substantially across the width of gap 26 in a direction substantially transverse to the longitudinal direction of the gap. As embodied herein, first vacuum channel 90 has a width of about 6.4 mm and second vacuum channel 92 has a width in the range of 0.51-1.27 mm. Preferably, a vacuum in the range of 25.4 cm $H_2$ to 254 cm $H_2O$ is applied through second vacuum channel 92 to the surface of the article being treated to remove residual solution therefrom. It is intended that a majority of the residual solution be removed by primary vacuum module 68.

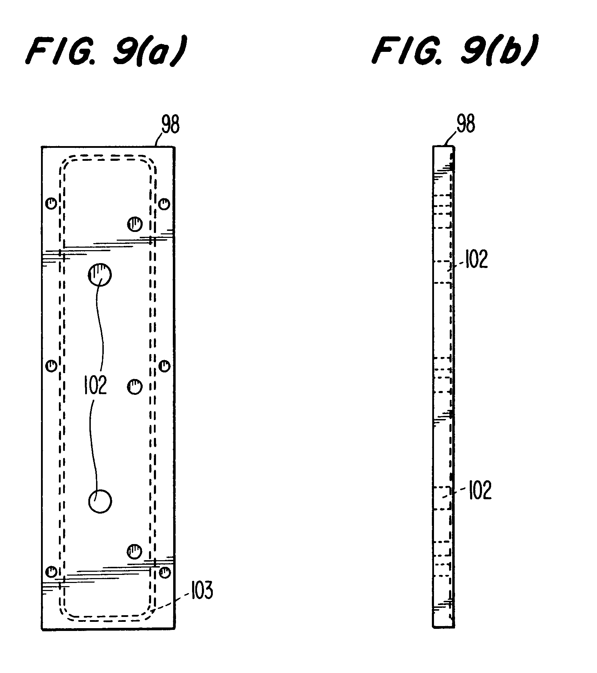

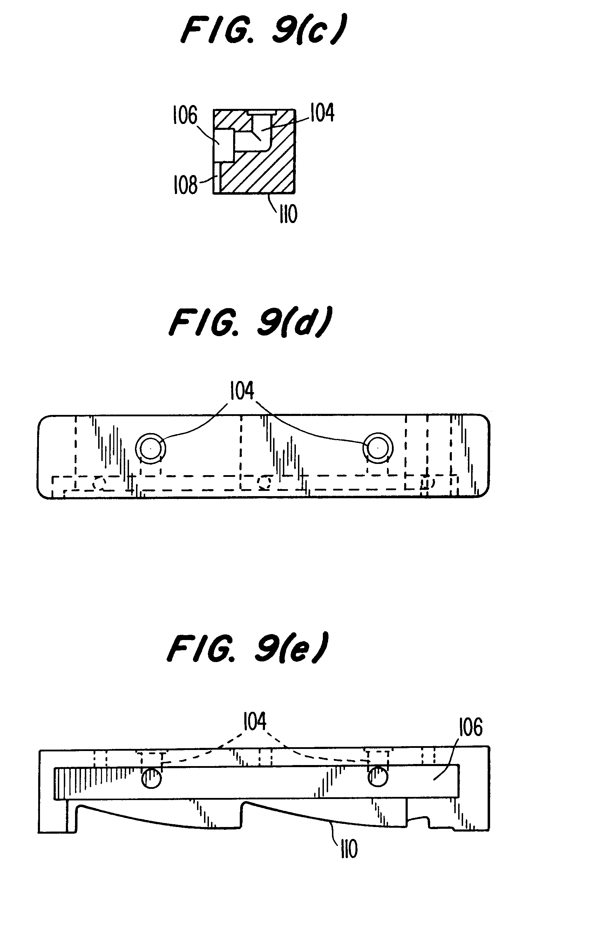

Preferably, the removal means of the present invention also includes a means for applying wash water onto the surface of the article being treated to displace residual solution. In the apparatus depicted schematically in Figure 1, the wash water is applied to the surface of the article being treated after the primary vacuum has been applied. As embodied herein and shown in Figures 5(a), 5(b), and 9(c)-9(h), the means for applying the wash water onto the surface of the article being treated includes a wash water module 94 disposed within the third opening 96 of upper section 24 of applicator unit 20. Wash water module 94 is frictionally engaged in opening 96 with a cover 98 secured to applicator unit 20 by means of bolts 100. Cover 98 is secured to wash water module 94 by means of bolts (not shown). A gasket 103, shown in Figure 9-(a), seals wash water module 94 in opening 96 of applicator unit 20. The cover 98 of wash water module 94 is shown in Figures 9(a) and 9(b), and includes two inlet openings 102 through which wash water is supplied.

In accordance with the invention, wash water module 94 includes at least one water inlet, a water reservoir communicating with the water inlet, and a water channel communicating at a first end with the water reservoir and at a second end with the gap 26. As shown in Figures 9(c)-(e), the present preferred embodiment of the wash water module includes two water inlets 104, a water reservoir 106, and a water channel 108 communicating at a first end with water reservoir 106 and at a second end with gap 26. Channel 108 is preferably approximately 1.3 mm in width and extends transversely across applicator unit 20 substantially the entire width of gap 26.

In a preferred embodiment, the removal means includes means for wiping the surface of the article being treated to remove residual solution. Two wipers in accordance with the present invention are schematically shown in Figure 1 and designated with the reference numerals 44 and 46. These wipers are biased in the direction of gap 26 by springs 49 to maintain contact between the bottom surface of the wiper and the surface of the article being treated.

As embodied herein and as shown in Figure 5-(b), a wiper 120 is disposed within the channel 108 of wash water module 94. The wiper has a bottom surface 109 substantially identical in shape to the surface of the article to be treated and disposed to contact the surface of the article to be treated as it is transported through the gap. Thus, the shape of the wiper will change depending on the configuration of the polymer article being treated.

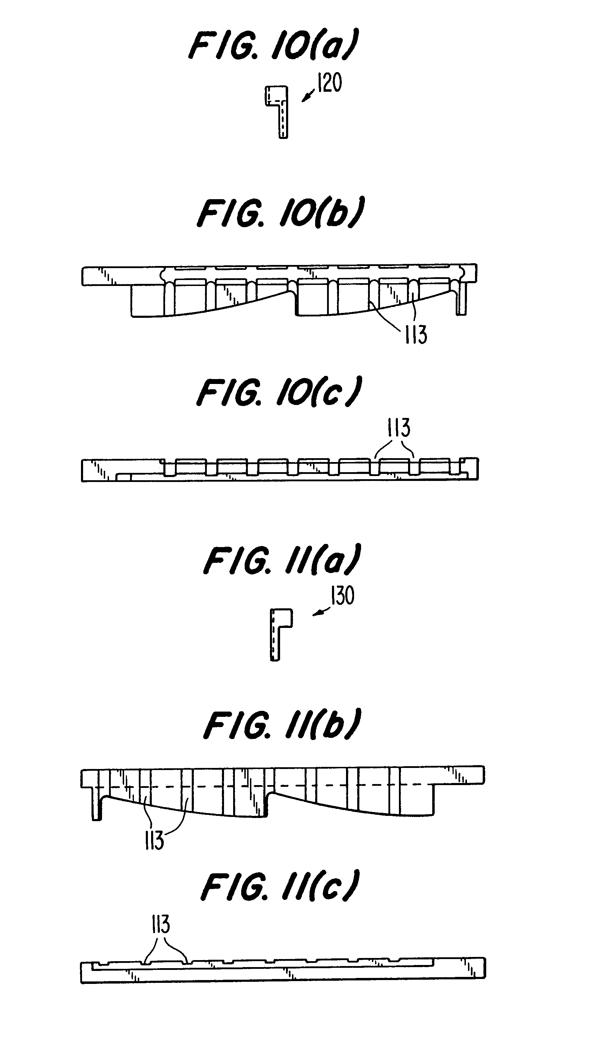

A first embodiment of a wiper according to the present invention is shown in Figures 10(a)-(c) and designated generally with the reference numeral 120. As illustrated in Figure 5(b), wiper 120 is intended to be disposed within water channel 108 of wash water module 94 and to extend past the bottom surface 110 of wash water module 94 into gap 26. Wiper 120 is keyed within water channel 108 as shown in Figures 1 and 5(b). A spring 122 biases wiper 120 in the direction of gap 26. Because wiper 120 is keyed into channel 108, the wiper has a limited ability to freely float within channel 108. To ensure that wiper 120 does not block channel 108, grooves 113 are formed in wiper 120 in the lengthwise direction for substantially the entire length of channel 108. Grooves 113 allow for the passage of water between water reservoir 106 and gap 26 in the event that wiper 120 is moved into a position where it would otherwise block channel 108.

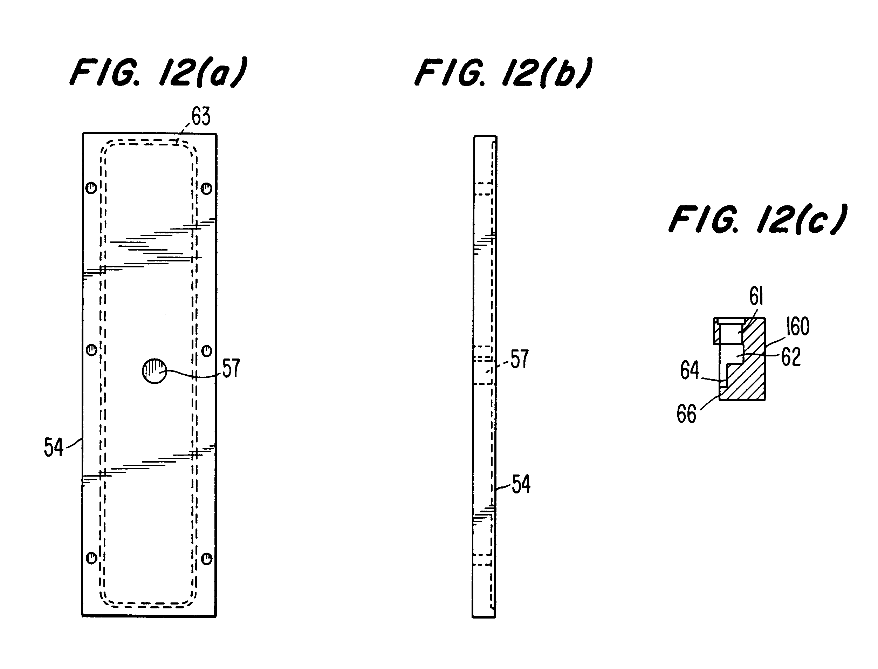

A second embodiment of a wiper according to the present invention is shown in Figures 11(a)-(c) and designated generally with the reference numeral 130. Wiper 130 is intended to be disposed within channel 108 in the same manner as wiper 120. Wiper 130 also includes lengthwise grooves 113. Essentially, wiper 130 is a mirror image of wiper 120.

As shown in Figure 2(a), upper section 24 of applicator unit 20 includes two additional openings 150 and 152. In the embodiment schematically depicted in Figure 1, opening 150 corresponds to the section designated as the second wash section 40. Accordingly, a secondary wash module identical to wash module 94 would be inserted into opening 150. Opening 152 in Figure 2(a) corresponds to the section designated in Figure 1 as secondary vacuum removal section 42. Accordingly, a secondary vacuum module identical to primary vacuum module 68 would be inserted into opening 152. It should be noted, however, that the apparatus of the present invention does not necessarily require a secondary wash module or a secondary vacuum module. Furthermore, even when these modules are used, it is not required that they be disposed in the order depicted in Figure 1. If it is not desired to use a secondary wash module or secondary vacuum module, then openings 150 and 152 can be eliminated from upper section 24 of applicator unit 20 or these openings can be plugged with a dummy module (not shown).

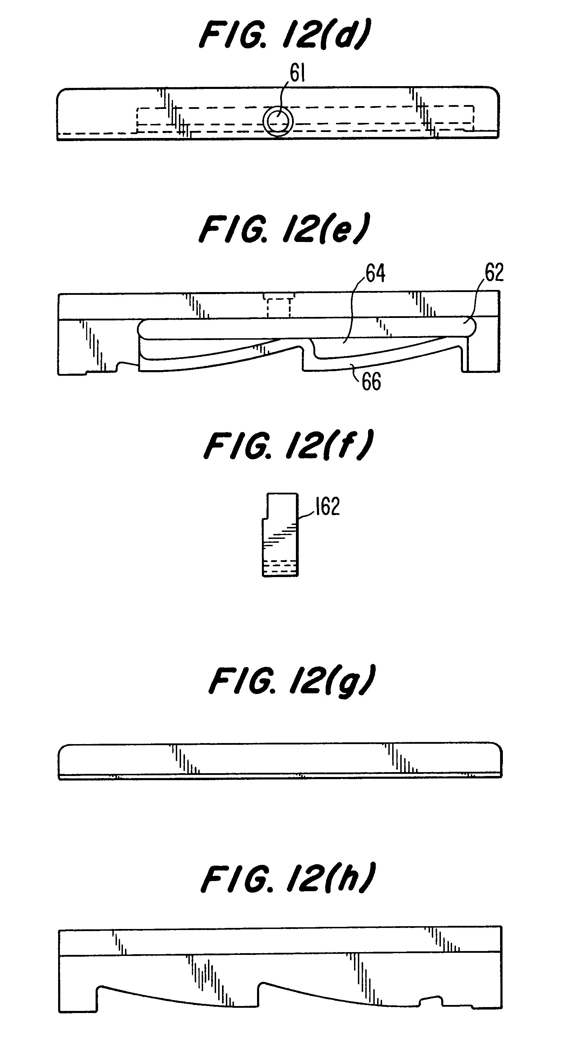

Figures 12(a)-(h) illustrate a second embodiment of the applicator module of the present invention. Similar to the first embodiment depicted in Figure 7(a)-(h), the second embodiment is comprised of a first section 160 and a second section 162 which are secured together by bolts (not shown). In the second embodiment, however, inlet 61, reservoir 62, first channel 64, and second channel 66 are all formed inside first section 160. Additionally, the second embodiment differs in that first and second channels 64 and 66, respectively, extend in a substantially vertical manner within applicator module 50. With the exception of these differences, the remaining features of the second embodiment of applicator module 50 are identical, and are designated with the same reference numerals used to designate features of the first embodiment of the applicator module.

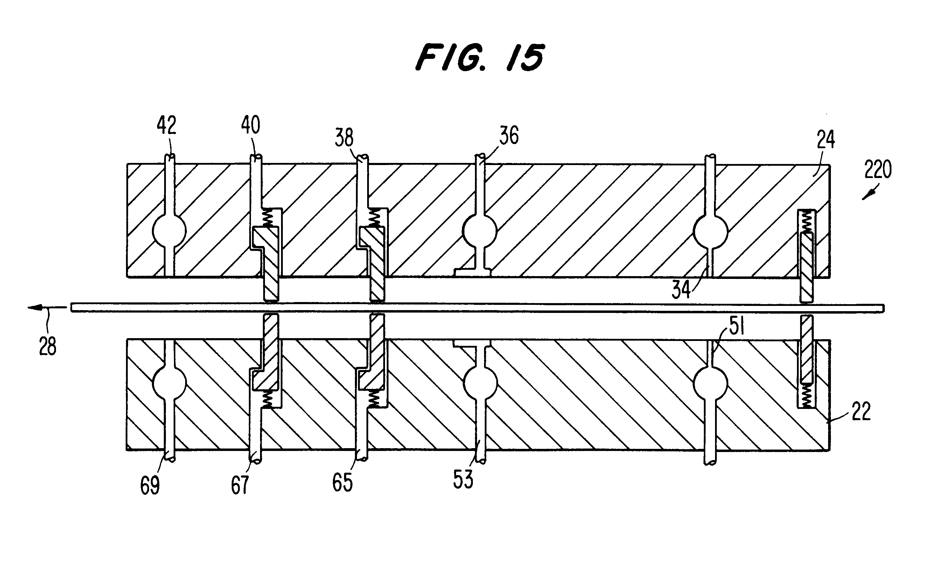

Figure 15 schematically illustrates a second embodiment of the applicator unit of the present invention. This second applicator unit is designated with the reference character 220 and is intended to be used when it is desired to treat both sides of a polymer article. In applicator unit 220, the lower section 22 includes a channel 51 which is identical in configuration to channel 34 of upper section 24. Channel 51 can be used to apply a treatment solution to the bottom surface of the polymer article. In applicator unit 220, lower section 22 also includes a primary vacuum removal section indicated by reference character 53, a first and second wash water displacement section 65 and 67, respectively, and a secondary vacuum removal section 69. The removal means and means for applying the modifier ingredient of the lower section of Figure 15 are shown only schematically. However, it should be understood that the structure of these sections is identical to the structure discussed earlier with respect to upper section 24. It should also be understood that similar to upper section 24, lower section 22 can be formed with openings to accommodate an applicator module 50, primary vacuum module 68 and wash water module 94.

As noted earlier, the applicator unit 220 depicted schematically in Figure 15 can be used to apply a treatment solution to both sides of a polymer article. Such an applicator unit would be especially useful when it is desired to treat the entire outer surface of a symmetrically shaped article. Alternatively, such an applicator unit would be useful in treating a polymer article that is especially sensitive to marring as a result of touching the surface of the gap as it is transported therethrough. Specifically, when the treatment solution, vacuum, and wash water are applied only from above the polymer article as in applicator unit 20, there is a tendency for the polymer article to be pushed downward so that it may contact the upper surface 23 of lower section 22. This is especially undesirable with sensitive polymer articles wherein such contact could result in a minor surface imperfection.

In lieu of utilizing the lower section 22 of applicator unit 220 to treat the bottom surface of the polymer article, it is contemplated that this lower section could be utilized to balance the pressure applied from the modules in the upper section to create an equilibrium in gap 26. Such an equilibrium would ensure that the polymer article would float within the confines of the gap without touching either surface of the gap. To achieve pressure balancing in gap 26 without treating the bottom surface of the polymer article, water would be inserted through channel 51 to balance the pressure created by the treatment solution flowing through channel 34. Additionally, a vacuum would be applied through primary vacuum removal section 53 for the purpose of balancing the pressure in gap 26 as a result of a vacuum being applied from the upper section through primary vacuum removal 36. Also, wash water would be applied through first and second wash water sections 65 and 67 to balance the pressure created by wash water being provided through first and second wash water sections 38 and 40 of upper section 24. Finally, a vacuum could be applied through secondary vacuum section 69 to balance the pressure in gap 26 from secondary vacuum removal section 46. Conventional flow meters and pressure gauges would be utilized to obtain the appropriate equilibrium in gap 26.

It should be noted that in treating certain polymer articles, it may be desired to remove all wipers from the applicator unit to ensure that the surface of the polymer article is not contacted in any manner as it is transported through the applicator.

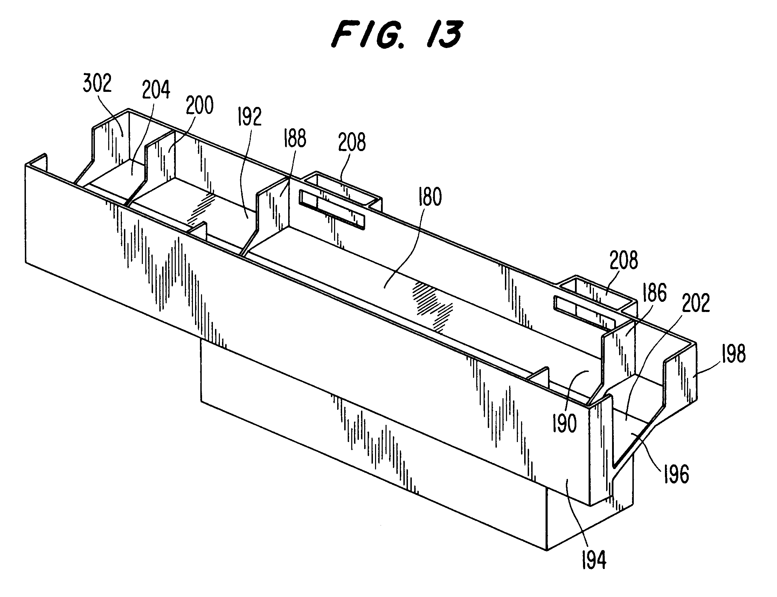

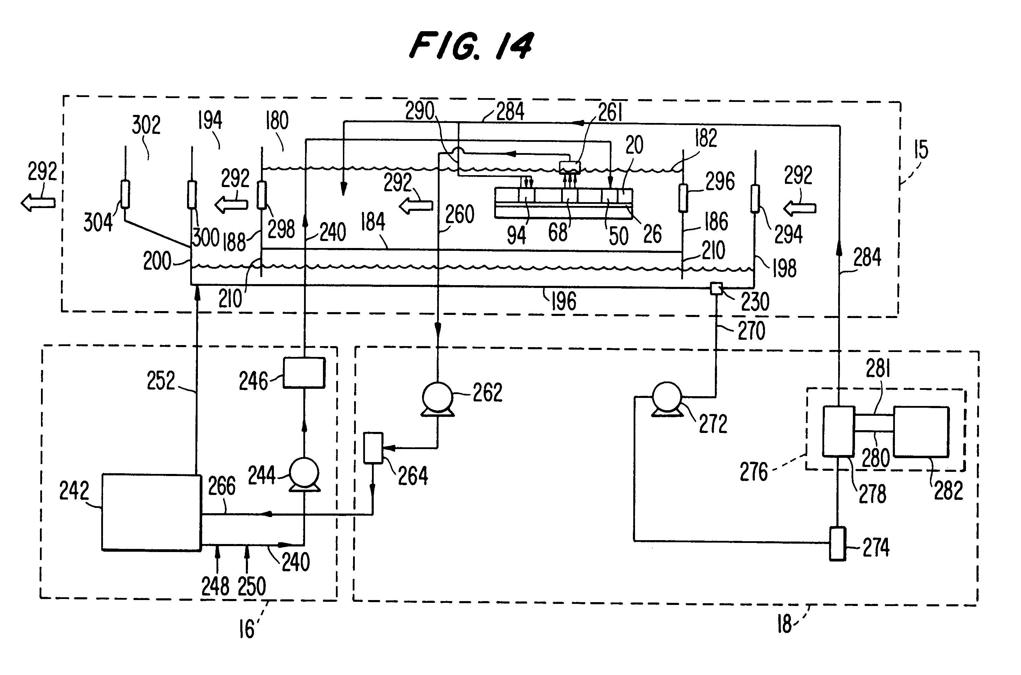

In a preferred embodiment of the present invention, the applicator unit 20 is disposed within a treatment tank. The treatment tank is surrounded by an overflow tank. This arrangement is shown schematically in Figure 14. A perspective view of the treatment tank within the overflow tank is shown in Figure 13.

Preferably, the treatment tank is filled with a fluid to a predetermined level and the applicator unit 20 is disposed within the treatment tank and immersed in the fluid. As embodied herein and as shown schematically in Figure 14, a treatment tank 180 is filled with water to a predetermined level 182, and applicator unit 20 is disposed in treatment tank 180 and immersed in the water. With reference to Figures 13 and 14, treatment tank 180 includes a bottom surface 184, an inlet wall 186, and an outlet wall 188. Inlet wall 186 and outlet wall 188 include inlet and outlet opening 190 and 192, respectively, to allow the polymer article to be transported through treatment tank 180.

The applicator unit is secured in treatment tank 180 by means of a support frame (not shown). Because the applicator unit is immersed in water, the portion 27 of gap 26 underlying the polymer article is filled with a thin layer of water. Thus, the polymer article can be transported smoothly through gap 26 while riding on this thin layer of water. The wiper 32, shown schematically in Figure 1 at the inlet end 30 of applicator unit 20, prevents the water from entering the inlet end 30 above the polymer article and disrupting the application of the treatment solution. Also, with this arrangement the solution containing the modifier ingredient is not exposed to the air so it cannot evaporate or be contaminated. This arrangement is environmentally safe because the solution cannot pollute the atmosphere.

Preferably, as shown in Figures 13 and 14, an overflow tank 194 surrounds treatment tank 180. With reference to Figures 13 and 14, overflow tank 194 includes a bottom surface 196, an inlet wall 198, and an outlet wall 200. Inlet wall 198 and outlet wall 200 are provided with inlet and outlet openings 202 and 204, respectively, to allow the polymer article to be transported through overflow tank 194.

Overflow conduits 208 are positioned in treatment tank 180 at a predetermined water level 182. If the water level in treatment tank 180 exceeds predetermined level 182, the water will flow through overflow conduits 208 into overflow tank 194. Preferably, as shown in Figure 14, a downwardly extending baffle 210 is provided at opposite ends of treatment tank 180 to minimize disturbance from fluid entering overflow tank 194 through overflow conduits 208. Treatment tank 180 and overflow tank 194 are enclosed at the top by a close-fitting cover (not shown).

The method in accordance with the invention of incorporating a modifier ingredient into the surface region of an article formed of a polymer includes the steps of transporting the polymer article through a gap and flowing a solution of the modifier ingredient through a confined area to provide a uniform coating of the solution on the surface of the article to be treated as the article is transported through the gap. The solution is maintained in contact with the surface of the article to incorporate the modifier ingredient into the surface region of the article. The method of the present invention is adaptable to both a continuous and a batch production method. The solution is typically maintained in contact with the article for a time period in the range of about one second to about ten seconds, although longer periods of contact time may be preferable in certain instances.

Preferably the article is immersed in a liquid bath as it is transported through the gap, and the solution is provided on the surface of the article through the liquid bath to prevent the solution from contacting the air. Also, the method of the present invention preferably includes the step of removing from the surface of the article the residual solution that has not been incorporated into the surface region. The step of removing the residual solution can include applying a vacuum to the surface of the article and applying wash water onto the surface of the article to displace residual solution. Additionally, a wiper may be provided in the gap through which the polymer article is transported, the wiper having a bottom surface disposed to contact the surface of the article being treated.

To obtain a better understanding of the subject invention, the applicator unit will now be described with reference to the overall treatment apparatus which is depicted schematically in Figure 14. As shown in Figure 14, the overall treatment apparatus has a treatment section designated generally by the reference character 15, a solution supply section designated generally by the reference character 16, and a filter and heat exchanger section designated generally by the reference character 18. Treatment section 15 includes applicator unit 20, treatment tank 180, and overflow tank 194. A polymer article travels through treatment section 15 wherein the modifier ingredient is applied. Solution supply section 16 supplies a modifier ingredient, such as an ultraviolet light stabilizer, to treatment section 15. Filter and heat exchanger section 18 is connected with both treatment section 15 and solution supply section 16 and is used to filter both the water and modifier solution used in the method and apparatus of the present invention.

With reference to Figure 14, it can be seen that the solution supply section 16 supplies a solution of the modifier ingredient in a solvent to treatment section 15 through conduit 240. Conduit 240 supplies the treatment solution to inlet 61 of applicator module 50. The treatment solution enters conduit 240 from the bottom of coalescer system 242 and is pumped through conduit 240 by pump 244 through a density cell 246. Density cell 246 monitors the concentration of the modifier ingredient in the solvent by monitoring the density of the overall treatment solution. Based on a signal provided by density cell 246, additional modifier ingredient and solvent may be added to the system through conduits 248 and 250, respectively.

Filter and heat exchange section 18 filters both the water and treatment solution used in the apparatus of the present invention. Treatment solution and water that are removed from applicator unit 20 from the vacuum inlets of the primary and secondary vacuum modules enters manifold 261. Thereafter, the solution and water are conveyed by pump 262 via conduit 260 through filter 264. After the solution is filtered by filter 264, it is conveyed via conduit 266 to coalescer system 242 where the treatment solution is separated from the water. The separated water is introduced into overflow tank 194 via conduit 252. As noted earlier, the separated solution exits coalescer system 242 via conduit 240.

Filter and heat exchanger section 18 also acts to filter and recirculate the water in the system. As shown in Figure 14, water is selectively removed from the bottom of overflow tank 194 via conduit 270 and conveyed by pump 272 through filter 274 to chiller/exchanger skid 276. A vortex breaker 230 is provided in the water bath of overflow tank 194 for eliminating vortices. Vortex breaker 230 is connected to conduit 270 which supplies water to chiller/exchanger skid 276. Chiller/exchanger skid 276 includes a heat exchanger 278 connected by conduits 280 and 281 to chiller 282. A pump (not shown) pumps the chilled liquid from chiller 282 through heat exchanger 278. From heat exchanger 278, the cooled water (approximately 50°F) is conveyed through conduit 284 to treatment section 15.

Water entering treatment section 15 from filter and heat exchanger section 18 through conduit 284 is conveyed into treatment tank 180. Additionally, a conduit 290 splits off conduit 284 to provide wash water into wash water module 94. The wash water is supplied through inlets 104 of wash water module 94.

A polymer article is conveyed through treatment section 15 in the direction indicated by arrow 292. The article first enters overflow tank 194 through inlet opening 202 of inlet wall 198. Inlet opening 202 includes a seal 294 having an opening of substantially the same size and shape of the polymer article. Seal 294 is dimensioned to provide a clearance of approximately 1.02 mm.

The polymer article next enters treatment tank 180 through inlet opening 190 of inlet wall 186. Inlet opening 190 includes a seal 296 identical to seal 294. The polymer article exits treatment tank 180 and overflow tank 194 through outlet openings 192 and 204, respectively. Outlet openings 192 and 194 includes seals 298 and 300, respectively, that are identical to seal 294.

An exit chamber 302 is provided on the outlet side of overflow tank 194. Exit chamber 302 includes an air knife seal 304 through which the polymer article exits. Air knife seal 304 is identical in size and shape to seal 294, but also includes a means for blowing compressed air onto the top and bottom surfaces of the polymer article to remove residual water.

The apparatus of the present invention is intended for use in a conventional extrusion line manufacturing process. Such a process typically includes an extruder for forming the polymer article, an embossing roll for texturizing the polymer article, a cooling tank which solidifies the polymer article, a cutter for sizing the polymer article and a packing table for preparing the article for shipping. In such a process, the extruder typically provides the motive force for moving the article through the processing facilities and a puller (conveyor) is typically positioned at an intermediate position to provide additional motive force. Commonly, the puller is positioned between the cooling tank and the cutter.

The apparatus of the present invention is intended to be an integral part of manufacturing process and is typically positioned between the cooling tank and the puller. Such an arrangement provides a steady state continuous manufacturing process. Thus, force from the extruder initially conveys the polymer article into the applicator unit, and the puller positioned at the outlet end of the applicator unit conveys the treated article to the cutter and packing table.

Although the present invention is described as being particularly useful for applying ultraviolet light stabilizing ingredients to the surface region of polymer articles, it must be clearly understood at the outset that the present invention is not limited to ultraviolet light stabilizing ingredients.

Rather, the present invention may be used with a variety of modifier ingredients. For instance, other modifier ingredients such as anti-oxidants, anti-static agents, and pigments may be added to modify the surface regions of various polymer articles. The nature of such ingredients is not critical as long as they are compatible with the polymer and with the solvent used in applying the modifier ingredient to the polymer. The modifier ingredients must be sufficiently soluble in the solvent to cause the desired amount to be incorporated into the polymer article.

It should also be understood that the apparatus of the present invention can be utilized to apply a solvent onto the surface of a polymer article to remove surface imperfections. It is not required that a modifier ingredient be provided in the solvent to accomplish this objective. Rather, the solvent will act to remove surface imperfections by blending the surface region of the article.

If the object is to remove surface imperfections from a polymer article, rather than applying a modifier ingredient thereto, then the apparatus of the present invention includes an applicator unit having a gap extending therethrough and a means for flowing the solvent onto the surface of the article to be treated as it is transported through the gap to provide a uniform coating of the solvent thereon. The solvent modifies the surface region of the article to remove surface imperfections. The apparatus also includes a means for removing solvent from the surface of the article. The apparatus for applying the solvent onto the polymer article is identical to the apparatus described earlier and shown in the drawings for applying a treatment solution including a modifier ingredient and a solvent. Thus in its broadest aspect the invention relates to a method and apparatus for modifying the surface of a polymer article.

The polymer articles to be treated in accordance with the present invention include, by way of example, any shape film, strip, ribbon, bar, or rod (hollow or solid). For instances, residential cladding, soffits used in the cladding industry and lineals for window enclosures are illustrative articles for use with the present invention. Thus, the present invention is not intended to be limited to use with polymer articles of a particular configuration or composition. However, the present invention is particularly useful with polymer articles having a multiple tiered configuration such as typical residential cladding. The presence of multiple tiers tends to result in the modifier solution accumulating in puddles which are difficult to remove with apparatus known in the art.

The polymers most amenable to this process are thermoplastic polymers such as PVC, polyolefins such as polyethylene and polypropylene, polystyrene, polycarbonates, thermoplastic polyesters such as polyethylene terephthalate and polybutylene terephthalate, thermoplastic acrylonitrile/butadiene/styrene copolymer, polyacrylates, and polymethacrylates.

The solvents in which the modifier ingredient is dissolved must be immiscible with the fluid used in the fluid bath through which the polymer article is transported, which is preferably water. Preferably, the solvent will have a density greater than 1. In the embodiment shown in the accompanying drawings, the article is surrounded by a water layer and the solvent solution of the desired modifier ingredient is directed to the surface of the article. Thus, the solvent is maintained out of contact with the air by the protective blanket of water surrounding it. Such an arrangement provides an environmentally safe process.

Suitable organic solvents for use in the process are those which are immiscible with the liquid bath and are capable of dissolving a suitable amount of modifying ingredient. In general, the types of solvents which meet these two requirements are halogenated hydrocarbons containing up to three carbon atoms in a straight chain, as well as aliphatic dibasic acid esters.

Representative halogenated hydrocarbons include methylene chloride, chloroform, 1,2-dichloroethane, trichloroethylene, 1,1,1-trichloroethane, 1,1,2-trichloroethane, 2-chloro-2-methylpropane and the like. Chlorinated hydrocarbons having four or more carbon atoms such as 1,4-dichlorobutane and 1,5-dichloropentane are undesirable in that PVC sheets were not impregnated with ultraviolet light stabilizers when such halocarbons were employed as the organic solvents.

Exemplary aliphatic dibasic acid esters are dimethyl glutarate, dimethyl adipate, and dimethyl succinate.

Mixtures of mutually miscible organic solvents can also be used. One can also use blends of these organic solvents mixed with solvents which alone could serve as solvents in this invention. For example, methylene chloride, ethyl acetate, 1,2-dichloroethane, and 2- or 3-pentanone can be blended with 2-heptanone, 2-octanone, 1,4-dichlorobutane or an arene such as toluene.

The preferred organic solvents employed in the process of this invention are methylene chloride, ethyl acetate, 2-pentanone and 3-pentanone, with methylene chloride being especially preferred.

The term "water-immiscible" as used herein means a solubility in water at ambient temperatures and pressures of no more than about 15% by volume. Since the aqueous media may contain materials besides water, even solvents with somewhat higher solubilities in water can be tolerated where their solubility in the aqueous solution would be lower than in pure water.

While ambient temperatures are preferred in the method of the present invention for economic reasons, higher as well as lower temperatures can also be used, if desired. There may be a property peculiar to a particular solvent which recommends a temperature other than ambient. For example, the solubility of ethyl acetate in water decreases with increasing temperature. Thus, it may be advantageous to use higher processing temperatures than ambient room temperature when using this solvent. Solvents which infuse only small amounts of ultraviolet light stabilizer into polymers such as PVC at room temperature can be readily used by raising the processing temperature.

The preferred ingredients for use in this invention are ultraviolet light stabilizers. Suitable UV stabilizers are represented by the following commercial materials:

Cyasorb UV 9: 2-hydroxy-4-methoxybenzophenone (Trademark of American Cyanamid Co.);

Cyasorb UV 531: 2-hydroxy-4-n-octoxybenzophenone (Trademark of American Cyanamid Co.);

Cyasorb UV 5411: (2(2'-hydroxy-5't-octylphenyl)-benzotriazole (Trademark of American Cyanamid Co.);

Irgastab 2002: a nickel phosphonate (Trademark of Ciba-Geigy Co.);

Sanduvor VSU: 2-ethyl-ethoxyanilide (Trademark of Sandoz Corp.);

Tinuvin P: 2(2'-hydroxy-5'methylphenyl)-benzotarsal (Trademark of Ciba-Geigy Co.);

Tinuvin 326: 2-(3''-t-butyl-2'-hydroxy-5'methylphenyl)-5-chlorobenzotriazole (Trademark of Ciba-Geigy Co.);

Tinuvin 144 and 770: Hindered Amine Light Stabilizers (Trademark of Ciba-Geigy Co. for HALS).

The following is a list of benzophenones and triazoles which may be used as UV stabilizers in the practice of this invention:
2,2'-dihydroxybenzophenone
2,2,4,4'-tetrahydroxybenzophenone
2,2'-dihydroxy-4,4'-dimethoxybenzophenone
2,2'-dihydroxy-4,4'-diethoxybenzophenone
2,2'-dihydroxy-4,4'-dipropoxybenzophenone 2,2'-dihydroxy-4,4'-dibutoxybenzophenone
2,2'-dihydroxy-4-methoxy-4'-ethoxybenzophenone
2,2'-dihydroxy-4-methoxy-4'-propoxybenzophenone
2,2'-dihydroxy-4-methoxy-4'-butoxybenzophenone
2,2'-dihydroxy-4-ethoxy-4'-propoxybenxophenone
2,3'-dihydroxy-4,4'-dimethoxybenzophenone
2,3'-dihydroxy-4 methoxy-4'-butoxybenzophenone
2-hydroxy-4,4,5'trimethoxybenzophenone
2-hydroxy-4,4,6'-tributoxybenzophenone
2-hydroxy-4-butoxy-4,5'-dimethoxybenzophenone
2-hydroxy-4-ethoxy-2,4'-dibutylbenzophenone
2-hydroxy-4-propoxy-4,6'-dichlorobenzophenone
2-hydroxy-4-propoxy-4,6'-dibromobenzophenone
2,4-dihydroxybenzophenone
2-hydroxy-4-methoxybenzophenone
2-hydroxy-4-ethoxybenzophenone
2-hydroxy-4-propoxybenzophenone
2-hydroxy-4-butoxybenzophenone
2-hydroxy-4-methoxy-4'-methylbenzophenone
2-hydroxy-4-methoxy-4'-propylbenzophenone
2-hydroxy-4-methoxy-4'butylbenzophenone
2-hydroxy-4-methoxy-4'-t-butylbenzophenone
2-hydroxy-4-methoxy-4'-chlorobenzophenone
2-hydroxy-4-methoxy-2'-chlorobenzophenone
2-hydroxy-4-methoxy-4'-bromobenzophenone
2-hydroxy-4,4'-dimethoxybenzophenone
2-hydroxy-4,4'dimethoxy-3-methylbenzophenone
2-hydroxy-4,4'-2'-ethylbenzophenone
2-hydroxy-4,4',5'-trimethoxybenzophenone
2-hydroxy-4-ethoxy-4'-methylbenzophenone
2-hydroxy-4-ethoxy-4'-ethylbenzophenone
2-hydroxy-4-ethoxy-4'-propylbenzophenone
2-hydroxy-4-ethoxy-4'-butylbenzophenone
2-hydroxy-4-ethoxy-4'-methoxybenzophenone
2-hydroxy-4,4'-diethoxybenzophenone
2-hydroxy-4-ethoxy-4'-propoxybenzophenone
2-hydroxy-4-ethoxy-4'butoxybenzophenone
2-hydroxy-4-ethoxy-4'-chlorobenzophenone
2-hydroxy-4-ethoxy-4'-bromobenzophenone
2-hydroxyacetophenone
2,4-dihydroxyacetophenone
2-(2'-hydroxy-5'-methylphenyl)benzotriazole
2-(2'-hydroxy-5'-t-butylphenyl)benzotriazole
2-(2'-hydroxy-3'-methyl-5-t'-butylphenyl)-
benzotriazole
2-(2'-hydroxy-5'-cyclohexylphenyl)benzotriazole
2-(2'-hydroxy-3'5'-dimethylphenyl)benzotriazole
2-(2'-hydroxy-5'-t-butylphenyl)-5-
chlorobenzotriazole
2-(2'-hydroxy-3'-di-t-butylphenyl)benzotriazole.

The preferred UV stabilizers for use in practicing this invention are: 2-(2'-hydroxy-5'-t-octylphenyl) benzotriazole, 2-(2'-hydroxy-5'-t-methylphenyl)benzotarsal, 2-hydroxy-4-methoxybenzophenone, 2-hydroxy-4-n-octoxybenzophenone, and 2-ethyl-2-ethoxyanelide.

**Claims**

1. A method of incorporating a modifier ingredient into the surface region of an article formed of a polymer, characterised by:

transporting the polymer article through a gap (26);

introducing a solution of the modifier ingredient in a solvent into the gap through an inlet (34) to provide a coating of the solution on the surface of the article to be treated as the article is transported through the gap; and

maintaining the solution in contact with said surface to incorporate the modifier ingredient into the surface region of the article.

2. A method as claimed in Claim 1, characterised in that at least a portion of at least of one of the members defining the gap has a surface with a configuration substantially identical to the configuration of the surface of the article to be treated.

3. A method as claimed in Claim 1 or Claim 2, characterised in that the article is immersed in a liquid bath (180) as it is transported through the gap (26), whereby the solution is prevented from contacting the air.

4. A method as claimed in any one of Claims 1 to 3, characterised by the step of removing from the surface of the article the residual solution that has not been incorporated into the surface region.

5. A method as claimed in Claim 4, characterised in that the step of removing the solution includes applying a vacuum to the surface of the article to remove the residual solution by suction.

6. A method as claimed in Claim 5, characterised in that the step of removing the solution further includes applying wash water onto the surface of the article after the vacuum has been applied to displace residual solution.

7. A method as claimed in Claim 6, characterised by the application of a second vacuum to the surface of the article after the wash water has been applied to the surface of the article.

8. A method as claimed in any one of Claims 4 to 7, characterised in that the step of removing the residual solution includes contacting the surface of the article to be treated as it is transported through the gap with a wiper (44,46).

9. Apparatus for incorporating a modifier ingredient into the surface region of an article formed of a polymer, characterised by:

an applicator unit (20) defining a gap (26) extending therethrough; and

means (244,240,61,62) for introducing a solution of the modifier ingredient in a solvent into the gap through an inlet (34) onto the surface of the article to be treated as it is transported through the gap to provide a coating of the solution thereon.

10. Apparatus as claimed in Claim 9, characterised by a treatment tank (180) filled with a fluid to a predetermined level, the applicator unit (20) being disposed within the treatment tank and immersed in the fluid.

11. Apparatus as claimed in Claim 10, characterised in that the introducing means includes a reservoir (62) formed in the applicator unit and the inlet, which extends between the reservoir (62) and the gap (26), is a channel (34) or a plurality of holes extending in a direction substantially transverse to the longitudinal direction of the gap (26).

12. Apparatus as claimed in any one of Claims 9 to 11, characterised by means (68,94,44,46) for removing from the surface of the article residual solution that has not been incorporated therein.

13. Apparatus as claimed in Claim 12, characterised in that the removing means includes a primary vacuum line (88) communicating with the gap (26) to remove residual solution from an article conveyed through the gap.

14. Apparatus as claimed in Claim 12 or Claim 13, characterised in that the removing means includes a water reservoir (106) formed in the applicator unit (20) and a channel (108) communicating with the reservoir and the gap (26), which channel supplies water, in use, from the reservoir (106) to the surface of an article being transported through the gap (26) for displacing residual solution therefrom.

15. Apparatus as claimed in any one of Claims 12 to 14, characterised in that the removing means includes at least one wiper (44,46) for wiping the surface of the article to remove residual solution.

16. Apparatus as claimed in Claims 13 and 14, characterised by a secondary vacuum line communicating with the gap (26) to remove residual solution from an article conveyed through the gap, the water reservoir (106) being disposed intermediate the primary vacuum line (88) and secondary vacuum line.

17. Apparatus as claimed in any one of Claims 9 to 16, characterised in that the applicator unit (20) has an upper section (24) and a lower section (22) which together define the gap, the upper section (24) including a first opening (52) which receives an applicator module (50) which defines the channel (34).

18. Apparatus as claimed in any one of Claims 9 to 17, characterised by sealing means (32) at the inlet end of the gap (26) arranged to prevent leakage of the solution while permitting ingress of the polymer article.

19. Apparatus as claimed in Claim 17, characterised in that the upper section (24) of the applicator unit (20) includes a second opening (70) which receives a primary vacuum module (68) which includes at least one vacuum inlet (86), a primary vacuum line (88) communicating with the inlet(s), and a vacuum channel (90,92) extending between the inlet(s) and the gap (26).

20. Apparatus as claimed in Claim 17, characterised in that the upper section (24) of the applicator unit (20) includes a third opening (96) which receives a wash module (94) which includes at least one water inlet (104), a water reservoir (106) communicating with the inlet(s) and a water channel (108) communicating with the reservoir (106) and the gap (26).

21. Apparatus as claimed in Claim 20, characterised in that the upper section (24) of the applicator unit (20) includes a fourth opening (150) which receives a secondary vacuum module (68) which includes at least one vacuum inlet, a secondary vacuum line communicating with the inlet(s) and a vacuum channel communicating with the vacuum reservoir and with the gap (26).

22. A method of modifying the surface region of an article formed of a polymer, characterised by:

transporting the polymer article through a gap (26);

introducing a solvent into the gap through an inlet to provide a coating of the solvent on the surface of the article to be treated as the article is transported through the gap, the solvent modifying the surface region of the article to remove surface imperfections;

maintaining the solvent in contact with the surface; and

removing the solvent from the surface of the article.

23. Apparatus for modifying the surface region of an article formed of a polymer, characterised by:

an applicator unit (20) defining a gap (26) extending therethrough;

means (244,240,61,62) for introducing a solvent into the gap (26) onto the surface of the article to be treated as it is transported through the gap to provide a coating of the solvent thereon, the solvent modifying the surface region of the article to remove surface imperfections; and

means (68,94,44,46) for removing solvent from the surface of the article.

FIG. I

FIG. 2(b)

EP 0 470 690 A2

FIG. 2(a)

**FIG. 3(a)**

**FIG. 3(b)**

**FIG. 4(a)**

**FIG. 4(b)**

# FIG. 5(a)

# FIG. 5(b)

# FIG. 6

# FIG. 7(a)

# FIG. 7(b)

# FIG. 7(c)

EP 0 470 690 A2

## FIG. 7(d)

## FIG. 7(e)

64

60

66

## FIG. 7(f)

59

## FIG. 7(g)

61

## FIG. 7(h)

61

62

60

## FIG. 8(a)

72

76

76

## FIG. 8(b)

72

76

76

## FIG. 8(c)

80
90
92

## FIG. 8(d)

## FIG. 8(e)

## FIG. 8(f)

## FIG. 8(g)

## FIG. 8(h)

# FIG. 9(a)

# FIG. 9(b)

# FIG. 9(c)

# FIG. 9(d)

# FIG. 9(e)

## FIG. 10(a)

120

## FIG. 10(b)

113

## FIG. 10(c)

113

## FIG. 11(a)

130

## FIG. 11(b)

113

## FIG. 11(c)

113

# FIG. 12(a)

# FIG. 12(b)

# FIG. 12(c)

# FIG. 12(d)

61

# FIG. 12(e)

64    62

66

# FIG. 12(f)

162

# FIG. 12(g)

# FIG. 12(h)

# FIG. 13

EP 0 470 690 A2

FIG. 14

EP 0 470 690 A2

FIG. 15